# EUROPEAN PATENT APPLICATION

(11) **EP 4 693 034 A1**
(43) Date of publication of application: **11.02.2026**
(21) Application number: 24779075.1
(22) Date of filing: 01.03.2024
(51) Int. Cl.: G06F 9/445, H04L 67/12, H04W 4/44, H04W 4/48, H04W 52/02

(54) **IN-VEHICLE COMMUNICATION DEVICE AND PUSH SERVER**

(30) Priority: 29.03.2023 JP 2023053434
(71) Applicant: DENSO CORPORATION, Kariya-city, Aichi-pref. 448-8661 (JP)
(72) Inventor: IKUSHIMA, Keisuke, Kariya-city, Aichi-pref., 448-8661 (JP)
(74) Representative: Winter, Brandl - Partnerschaft mbB
(86) International application number: PCT/JP2024/007820
(87) International publication number: WO 2024/202937

(57) **Abstract**

Upon receiving push data from a push server (3) as a result of the push server (3) receiving a push data transmission request from an application server (2), an onboard communication device (4) transmits the received push data to an onboard ECU (5). The onboard communication device is provided with an activation control unit (4a) that causes an onboard electronic control device, to which the push data is to be transmitted, to start an activation process when the onboard communication device is notified of an activation start instruction from the push server as a result of the push server being notified of the activation start instruction from the application server immediately after startup of a cloud side application.

## Description

### CROSS REFERENCE TO RELATED APPLICATION

The present application claims the benefit of priority from Japanese Patent Application No. 2023-053434 filed on March 29, 2023. The entire disclosures of all of the above application are incorporated herein by reference.

### TECHNICAL FIELD

The present disclosure relates to an onboard communication device and a push server.

### BACKGROUND ART

As one of the remote request services for accessing applications of an onboard system from outside the vehicle, a push system for transmitting push data is provided. In the push system, an application server and a push server are provided on a cloud side, and an onboard communication device and an onboard electronic control unit (hereinafter referred to as the onboard ECU (Electronic Control Unit)) are provided on a vehicle side. When, for example, an application on the cloud side is activated by a smartphone terminal or the like, and a transmission request for push data is received from the application server, the push server transmits the push data to the onboard communication device. The onboard communication device transmits the push data sent from the push server to the onboard ECU, and delivers the push data to the application on the onboard system side installed in the onboard ECU (see, for example, Patent Literature 1).

### PRIOR ART LITERATURE

### PATENT LITERATURE

Patent Literature 1: JP 2019-192953 A

### SUMMARY OF INVENTION

In order for push data to be transmitted to the application on the onboard system side, it is necessary that the onboard electronic control unit (ECU) has completed the activation process and is in an activated state. However, depending on the ECU configuration, functional arrangement, and other factors, there is a possibility that the activation time required from the start to the completion of the activation process of the onboard ECU may become prolonged. Therefore, in a configuration in which the onboard communication device causes the onboard ECU to start the activation process upon receiving push data transmitted from the push server, there is a possibility that the onboard ECU may not be activated at the timing when the onboard communication device transmits the push data to the onboard ECU. As a result, it becomes difficult to provide the remote request service immediately, leading to inferior serviceability and marketability.

The present disclosure aims to immediately activate the onboard electronic control unit, which is the transmission destination of the push data.

According to one aspect of the present disclosure, when a transmission request for push data is received by the push server from the application server and the push data is subsequently received from the push server, the received push data is transmitted to the onboard electronic control unit. The activation control unit is configured to cause the onboard electronic control unit, which is a transmission destination of the push data, to start an activation process when an activation start instruction is notified from the push server in response to an activation start instruction being notified from the application server to the push server immediately after startup of an application on a cloud side.

When an activation start instruction is notified from the push server, the onboard electronic control unit is made to start the activation process. When the application on the cloud side is activated, by immediately starting the activation process of the onboard electronic control unit, which is the transmission destination of the push data, it is possible to immediately complete the activation of the onboard electronic control unit, which is the transmission destination of the push data. This reduces the possibility that the onboard electronic control unit is not activated at the timing when the onboard communication device transmits the push data to the onboard electronic control unit, and enables the application on the onboard system side installed in the onboard electronic control unit to be immediately activated, thereby enhancing serviceability and marketability.

According to one aspect of the present disclosure, a push data is transmitted to an onboard communication device upon receiving a transmission request for the push data from an application server. The activation start instruction notification unit is configured to, when an activation start instruction is notified from the application server immediately after startup of an application on a cloud side, notify the activation start instruction to the onboard communication device that is a transmission destination of the push data.

When an activation start instruction is notified from the application server immediately after the activation of the application on the cloud side, the activation start instruction is notified to the onboard communication device, which is the transmission destination of the push data. When the application on the cloud side is activated, by immediately starting the activation process of the onboard electronic control unit, which is the transmission destination of the push data, it is possible to immediately complete the activation of the onboard electronic control unit, which is the transmission destination of the push data. This reduces the possibility that the onboard electronic control unit is not activated at the timing when the onboard communication device transmits the push data to the onboard electronic control unit, and enables the application on the onboard system side installed in the onboard electronic control unit to be immediately activated, thereby enhancing serviceability and marketability.

### BRIEF DESCRIPTION OF DRAWINGS

The above and other objects, features, and advantages of the present disclosure will become more apparent from the following detailed description with reference to the accompanying drawings. The drawings are as follows:
FIG. 1 is a diagram showing the overall configuration of the push system in the first embodiment.
FIG. 2 is a functional block diagram of the onboard communication device and the push server.
FIG. 3 is a sequence diagram.
FIG. 4 is a sequence diagram of the second embodiment.
FIG. 5 is a sequence diagram of the third embodiment.
FIG. 6 is a functional block diagram of the onboard communication device and the push server in the fourth embodiment.
FIG. 7 is a sequence diagram.
FIG. 8 is a sequence diagram.

### DESCRIPTION OF EMBODIMENTS

Hereinafter, a plurality of embodiments will be described with reference to the drawings. Description of portions common to multiple embodiments may be omitted.

### (First Embodiment)

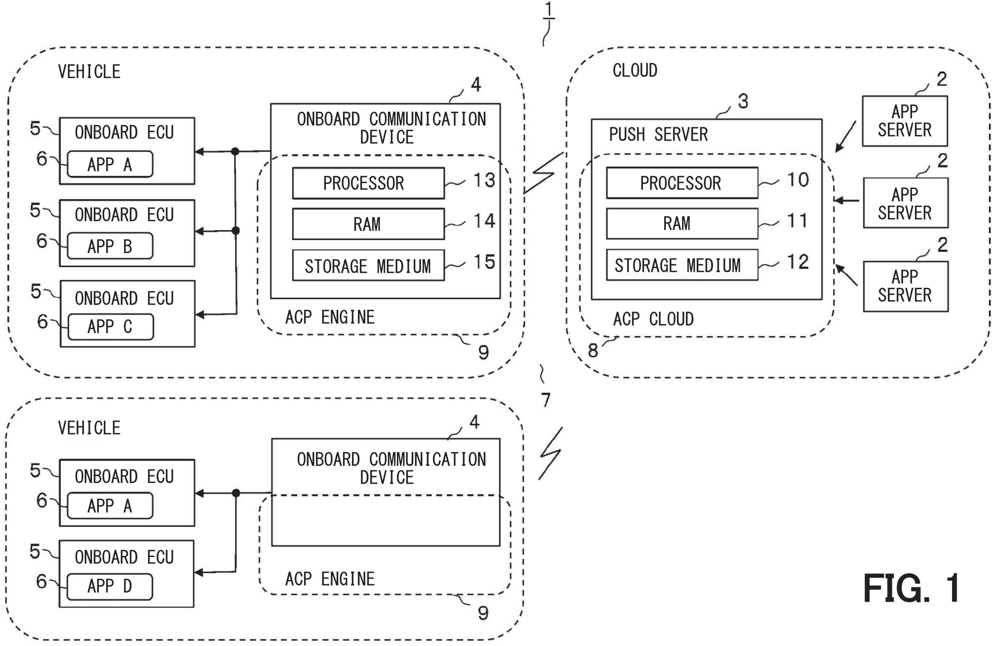

The first embodiment will be described with reference to FIG. 1 to FIG. 3. The push system 1 shown in FIG. 1 includes an application server 2 and a push server 3 on the cloud side, and an onboard communication device 4 and an onboard ECU 5 on the vehicle side. The onboard ECU 5 is equipped with an application 6 on the onboard system side for realizing a remote request service. The push system 1 is a system that, for example, when an application on the cloud side is activated by a smartphone terminal or the like, enables the transmission of push data from the application server 2 to the application 6 on the onboard system side.

For example, when a user remotely activates an application such as pre-boarding air conditioner start or post-boarding door lock via a smartphone terminal and performs a predetermined operation, a transmission request for push data instructing air conditioner start or door lock is transmitted from the application server 2 to the push server 3. The push data is then transmitted to the onboard ECU 5 via the onboard communication device 4 and delivered to the application 6 on the onboard system side, which realizes functions such as air conditioner start or door lock.

In FIG. 1, a configuration is exemplified in which one push server 3 is provided for a plurality of application servers 2 on the cloud side. However, a configuration in which a plurality of push servers 3 are provided for a plurality of application servers 2 may also be adopted. Further, on the vehicle side, a configuration is exemplified in which one onboard communication device 4 is provided for a plurality of onboard ECUs 5. However, a configuration in which a plurality of onboard communication devices 4 are provided for a plurality of onboard ECUs 5 may also be adopted.

The push system 1 employs an automotive wireless communication platform 7. The automotive wireless communication platform 7 is realized by the ACP cloud 8 on the cloud side and the ACP engine 9 on the vehicle side, enabling secure connection between the application server 2 and the application 6 at any time and from anywhere. Specifically, the onboard ECU 5, for example, is in a power-off state when the vehicle is parked, and the power states differ from one another. In addition, the system configuration including the onboard ECU 5 differs for each vehicle. The automotive wireless communication platform 7 conceals such differences in the power state of the onboard ECU 5 and differences in system configuration for each vehicle from the application server 2 side. As a result, it is possible to realize a pseudo-always-on connection in which all onboard ECUs 5 for each vehicle appear as if they are always connected to an external network.

Hereinafter, the cloud-side system equipped with the automotive wireless communication platform 7 and the onboard system on the vehicle side will be described.

### (1) Cloud Side System

First, the vehicle-side onboard system will be described. The application server 2 functions as the source of transmission requests for push data. The application server 2 manages at least one of an application ID and a token for identifying the application 6. When transmitting a transmission request for push data to the push server 3, the application server 2 provides the application ID or token as request information, together with the message body to be sent to application 6. When using a token as the request information, the application server 2 reads out the token associated with the transmission destination of the push data. The token serves as key information for determining the transmission destination of the push data in the push server 3 and the onboard system, or the like.

The push server 3 is the source of transmission for push data and includes the configuration of the ACP cloud 8, which realizes the cloud side functions of the automotive wireless communication platform 7. The push server 3 mainly includes a microcontroller having a processor 10, RAM 11, and a storage medium 12. The push server 3 executes various operations by having the processor 10 execute a control program stored in the storage medium 12, thereby realizing the cloud side functions of the automotive wireless communication platform 7.

The push server 3 establishes a communication line via wireless communication over a mobile communication network with the onboard communication device 4, and is capable of transmitting push data to the onboard communication device 4 while the communication line is connected. The mobile communication network includes, for example, a cellular network, Wi-Fi (registered trademark), and V2X (Vehicle-to-Anything), or the like. When the push server 3 receives a transmission request for push data from the application server 2, the push server 3 selects the onboard communication device 4 as the transmission destination of the push data and transmits the push data to the selected onboard communication device 4.

The push server 3 provides functions such as authentication of the communication counterpart, encryption of communication content, and detection of tampering through TLS (Transport Layer Security) processing, and also provides data communication functions using TCP/IP, UDP/IP, and other protocols, thereby enabling secure data communication with the application server 2 and the onboard communication device 4.

The push server 3 is capable of retrying the transmission of push data within a predetermined period. There are situations where an immediate response from the onboard system is required when transmitting push data, and situations where it is sufficient for the push data to reach the notification destination. A retry deadline is set according to the required response. If the transmission of push data fails, the push server 3 retries the transmission of push data within a predetermined period before the expiration of the retry deadline set according to the content of the push data. If the retry deadline expires while the transmission of push data continues to fail, the push server 3 determines that the transmission of push data has failed and terminates the retry of the push data transmission.

### (2) Vehicle-Side Onboard System

Next, the vehicle-side onboard system will be described. The onboard communication device 4, also referred to as a TCU (Telematics Control Unit) or DCM (Data Communication Module), is the transmission destination of push data and includes the configuration of the ACP engine 9, which realizes the vehicle side functions of the automotive wireless communication platform 7. The onboard communication device 4 mainly includes a microcontroller having a processor 13, RAM 14, and a storage medium 15. The onboard communication device 4 performs various operations by having the processor 13 execute a control program stored in the storage medium 15, thereby realizing the vehicle side functions of the automotive wireless communication platform 7.

The onboard communication device 4 is connected to a plurality of onboard ECUs 5 via an in-vehicle network. The in-vehicle network includes, for example, Ethernet (registered trademark), CAN (Controller Area Network) (registered trademark), FLEXRAY (registered trademark), CXPI (Clock Extension Peripheral Interface) (registered trademark), LIN (Local Interconnect Network), or the like. The in-vehicle network is provided for each system such as powertrain, chassis, body, multimedia, safety, or the like.

The onboard communication device 4 establishes a communication line with the push server 3 via wireless communication over a mobile communication network, and is capable of receiving push data from the push server 3 while the communication line is connected. When the onboard communication device 4 receives push data from the push server 3, the onboard communication device 4 selects the onboard ECU 5 as the transmission destination and transmits the push data to the selected onboard ECU 5.

The onboard communication device 4 provides functions such as authentication of the communication counterpart, encryption of communication content, and detection of tampering through TLS processing, and also provides data communication functions using TCP/IP, UDP/IP, and other protocols. Secure data communication may be enabled between the onboard communication device 4 and the push server 3, as well as between the onboard communication device 4 and the onboard ECU 5.

The onboard communication device 4 is capable of maintaining an online state connected to the communication network even when, for example, the vehicle is parked and the main power supply of the vehicle is off, specifically, when the so-called ignition is off. The onboard communication device 4 monitors the connection state with the push server 3 via wireless communication and the progress state of push data transmission within the in-vehicle network. The onboard communication device 4 cooperates with the push server 3 to enable mutual connection confirmation between the onboard communication device 4 and the push server 3. The mutual connection confirmation between the onboard communication device 4 and the push server 3 may also be referred to as liveness monitoring.

If the push data does not reach the transmission destination, the onboard communication device 4 notifies the source of the failure of push data transmission together with reason information associated with the failure. For example, if the application 6 or the onboard ECU 5, which is the transmission destination of the push data, does not exist on the in-vehicle network, the onboard communication device 4 notifies the push server 3, which is the source, of the failure of push data transmission together with such reason information.

The onboard communication device 4 specifies, as ECU information regarding the onboard ECU 5 that is the transmission destination of the push data, transmission destination information and status information. The transmission destination information may also be referred to as destination information. The transmission destination information is information that enables identification of the onboard ECU 5 that is the transmission destination of the push data among a plurality of onboard ECUs 5. The onboard communication device 4 acquires the transmission destination information by referring to the application ID or token. The status information is information that enables identification of the power state (on/off state) of the onboard ECU 5 specified as the transmission destination. Specifically, the power-off state here refers to a state in which the onboard ECU 5 has transitioned from the activated state to a suspended state or the like due to the ignition being off or the like. At this time, the onboard ECU 5 can receive activation requests with low power consumption, but is in a state in which data communication is not possible. When the power of the onboard ECU 5 specified as the transmission destination is in the off state based on the status information, the onboard communication device 4 performs an activation process to activate the onboard ECU 5 and turn the power to the on state (activated state).

The onboard ECU 5 is equipped with one or more applications 6 and is capable of executing applications. The onboard ECU 5 mainly comprises a microcontroller including a processor (not shown), RAM (not shown), and a storage medium (not shown). The onboard ECU 5 executes various operations by having the processor execute a control program stored in the storage medium, and operates as an end ECU that is the final transmission destination of the push data transmitted from the push server 3. When the onboard ECU 5 receives push data transmitted from the onboard communication device 4, it identifies registration information matching the application ID or token associated with the push data, specifies the application 6 that is the transmission destination of the push data from among a plurality of applications 6, and transmits the push data to the application 6 specified as the transmission destination.

The onboard ECU 5 provides an encryption processing function and enables secure data communication between the onboard communication device 4 and the application 6. Unlike the onboard communication device 4, the onboard ECU 5 is, in principle, turned off to suppress power consumption when the vehicle power supply is off. At this time, the onboard ECU 5 is also disconnected from the communication network. Note that some onboard ECUs 5 may not be equipped with the application 6. In addition, the onboard communication device 4 may be provided in the onboard system as a configuration that also serves as the onboard ECU 5 and may be equipped with the application 6.

In the above configuration, as described previously, in a configuration in which the onboard communication device 4 causes the onboard ECU 5 to start the activation process upon receiving push data transmitted from the push server 3, there is a possibility that the onboard ECU 5 is not activated at the timing when the onboard communication device 4 transmits the push data to the onboard ECU 5. In this regard, in the present embodiment, the onboard communication device 4 and the push server 3 each have the following functions.

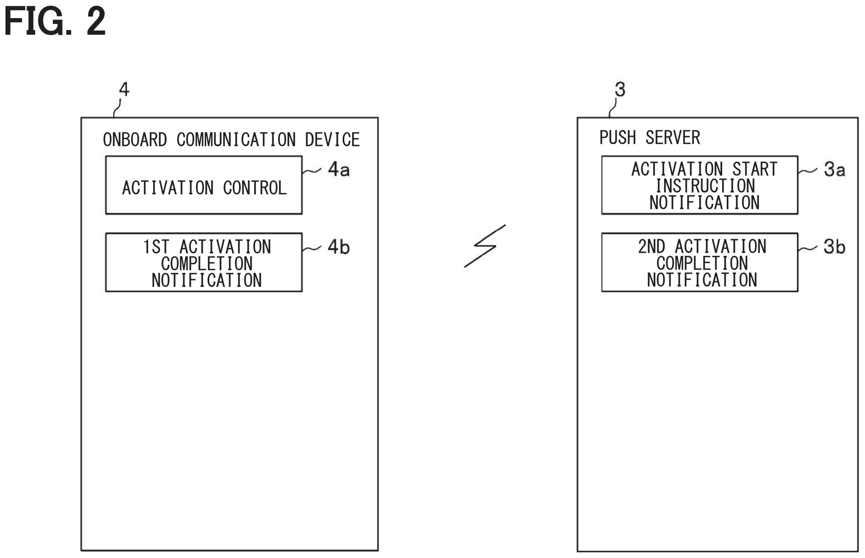

As shown in FIG. 2, the onboard communication device 4 includes an activation control unit 4a and a first activation completion notification unit 4b. When an activation start instruction is notified from the push server 3, the activation control unit 4a causes the onboard ECU 5, which is the transmission destination of the push data, to start the activation process in a low power consumption state. At this time, the activation control unit 4a does not cause the onboard ECUs 5 that are not the transmission destination of the push data to start the activation process. When an activation completion notification indicating that the onboard ECU 5 has completed activation is notified, the first activation completion notification unit 4b notifies the push server 3 of the activation completion notification.

The push server 3 includes an activation start instruction notification unit 3a and a second activation completion notification unit 3b. When an activation start instruction is notified from the application server 2 immediately after the activation of the application on the cloud side, the activation start instruction notification unit 3a notifies the activation start instruction to the onboard communication device 4, which is the transmission destination of the push data. When an activation completion notification is notified from the onboard communication device 4, the second activation completion notification unit 3b notifies the application server 2 of the activation completion notification.

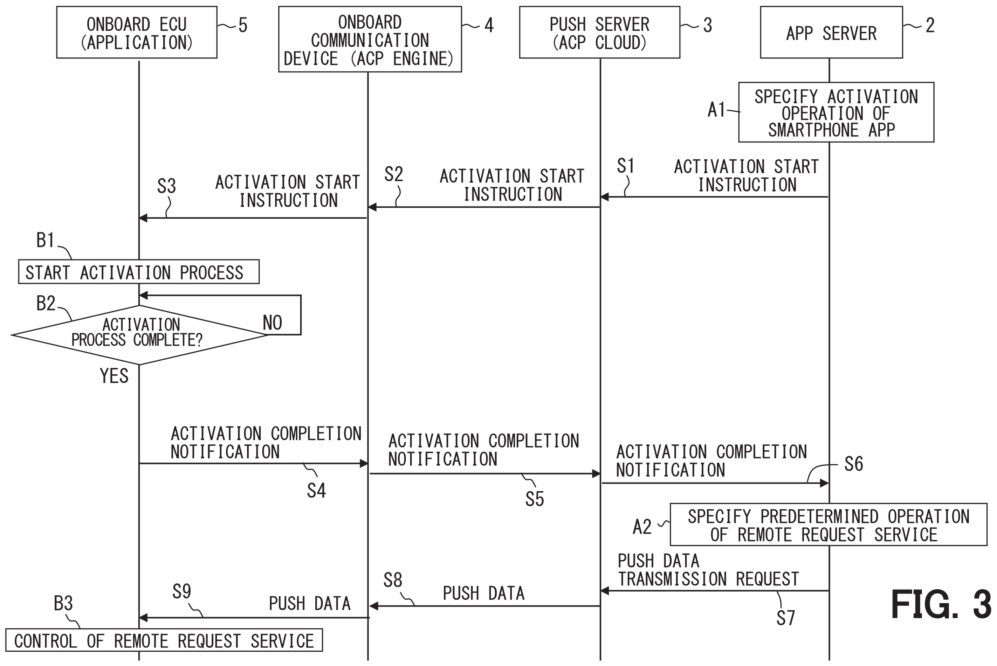

The operation of the above-described configuration will be explained with reference to FIG. 3. The application server 2, for example, when it identifies that a user has performed an operation to activate a smartphone application on a smartphone terminal (A1), notifies the push server 3 of an activation start instruction (S1). When the push server 3 receives the activation start instruction from the application server 2, it notifies the onboard communication device 4 of the activation start instruction (S2). When the onboard communication device 4 receives the activation start instruction from the push server 3, it notifies the onboard ECU 5, which is the transmission destination of the push data, of the activation start instruction (S3). That is, the onboard communication device 4 specifies the onboard ECU 5 that is the transmission destination of the push data and notifies only that onboard ECU 5 of the activation start instruction, and does not notify onboard ECUs 5 that are not the transmission destination of the push data.

When the onboard ECU 5 receives the activation start instruction from the onboard communication device 4, it transitions from the sleep state to a low power consumption state and starts the activation process (B1). When the onboard ECU 5 completes the activation process (B2: YES), it notifies the onboard communication device 4 of an activation completion notification indicating that its own activation process has been completed (S4). When the onboard communication device 4 receives the activation completion notification from the onboard ECU 5, it notifies the push server 3 of the activation completion notification (S5). When the push server 3 receives the activation completion notification from the onboard communication device 4, it notifies the application server 2 of the activation completion notification (S6).

When the application server 2, for example, identifies that the user has performed a predetermined operation for the remote request service (A2), it transmits a transmission request for push data to the push server 3 (S7). When the push server 3 receives the transmission request for push data from the application server 2, it transmits the push data to the onboard communication device 4 (S8). When the onboard communication device 4 receives the push data transmitted from the push server 3, it transmits the push data to the onboard ECU 5 (S9). When the onboard ECU 5 receives the push data transmitted from the onboard communication device 4, it delivers the push data to the application 6 corresponding to the push data, activates the application 6, and controls the remote request service corresponding to the push data (B3).

As described above, according to the first embodiment, the following operational effects can be obtained. In the onboard communication device 4, when an activation start instruction is notified from the push server 3, the onboard ECU 5 is made to start the activation process. When the application on the cloud side is activated, by immediately starting the activation process of the onboard ECU 5, which is the transmission destination of the push data, it is possible to immediately complete the activation of the onboard ECU 5, which is the transmission destination of the push data. This reduces the possibility that the onboard ECU 5 is not activated at the timing when the onboard communication device 4 transmits the push data to the onboard ECU 5, enables the application on the onboard system side installed in the onboard ECU 5 to be immediately activated, and improves serviceability and marketability.

In the push server 3, when an activation start instruction is notified from the application server 2 immediately after the activation of the application on the cloud side, the activation start instruction is notified to the onboard communication device 4, which is the transmission destination of the push data. When the application on the cloud side is activated, by immediately starting the activation process of the onboard ECU 5, which is the transmission destination of the push data, it is possible to immediately complete the activation of the onboard ECU 5, which is the transmission destination of the push data. This reduces the possibility that the onboard ECU 5 is not activated at the timing when the onboard communication device 4 transmits the push data to the onboard ECU 5, enables the application on the onboard system side installed in the onboard ECU 5 to be immediately activated, and improves serviceability and marketability.

### (Second Embodiment)

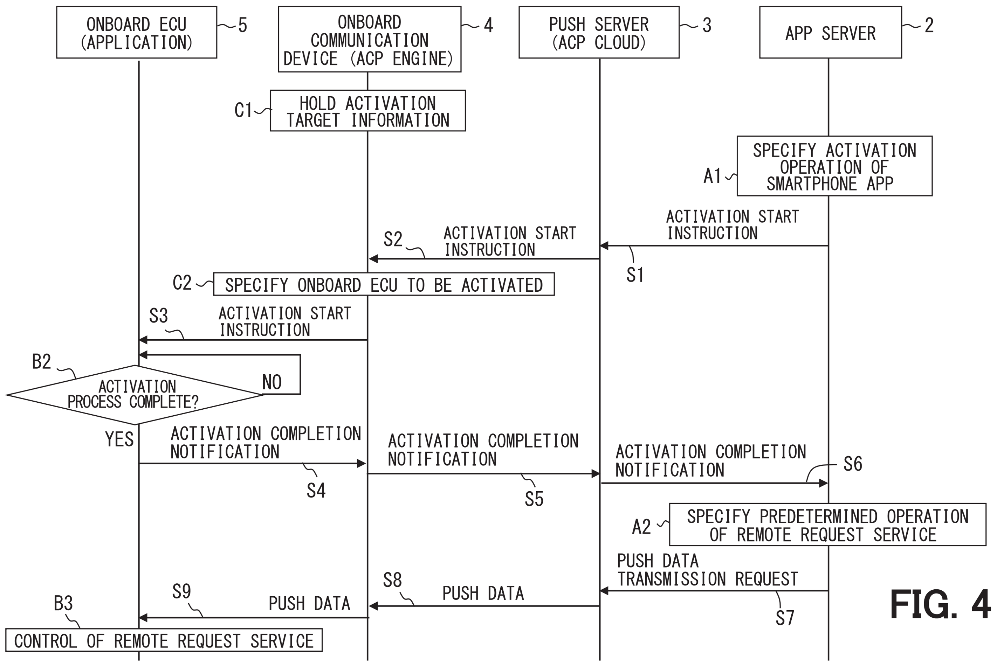

The second embodiment will be described with reference to FIG. 4. In the onboard communication device 4, the activation control unit 4a holds activation target information that enables identification of the onboard ECU 5 to be activated by the activation process, and specifies the onboard ECU 5 to be activated based on the activation target information. The push server 3 transmits the push data to the onboard ECU 5 specified based on the activation target information.

The operation of the above-described configuration will be explained with reference to FIG. 4. The onboard communication device 4 holds, for example, activation target information preset by the vehicle manufacturer (C1). When the onboard communication device 4 receives an activation start instruction from the push server 3, it refers to the activation target information and specifies the onboard ECU 5 to be activated by the activation process based on the activation target information (C2). The onboard communication device 4 specifies the onboard ECU 5 identified based on the activation target information as the transmission destination of the push data and notifies the onboard ECU 5, which is the transmission destination of the push data, of the activation start instruction (S3). Thereafter, the same processing as in the first embodiment is performed.

As described above, according to the second embodiment, the onboard ECU 5 to be activated by the activation process is specified based on the activation target information, the onboard ECU 5 specified based on the activation target information is specified as the transmission destination of the push data, and the activation start instruction is notified to the onboard ECU 5, which is the transmission destination of the push data. This makes it possible to achieve both improved serviceability and marketability and the trade-off relationship of reducing vehicle power consumption.

For example, in vehicles such as inexpensive compact cars or light vehicles with small battery capacity, where the risk of insufficient charging is relatively high, there is a strong need to suppress unnecessary vehicle power consumption. For example, by registering only applications requiring immediacy, such as door lock, as activation targets in the activation target information, and excluding applications not requiring immediacy, such as air conditioner start, from the activation targets, it is possible to prioritize the activation of applications requiring immediacy while suppressing vehicle power consumption.

On the other hand, in vehicles such as electric vehicles in environments where charging facilities are well established, the need to suppress unnecessary vehicle power consumption is not so high. For example, by registering not only applications requiring immediacy, such as door lock, but also applications not requiring immediacy, such as air conditioner start, as activation targets in the activation target information, it is possible to simultaneously activate many applications regardless of whether immediacy is required.

### (Third Embodiment)

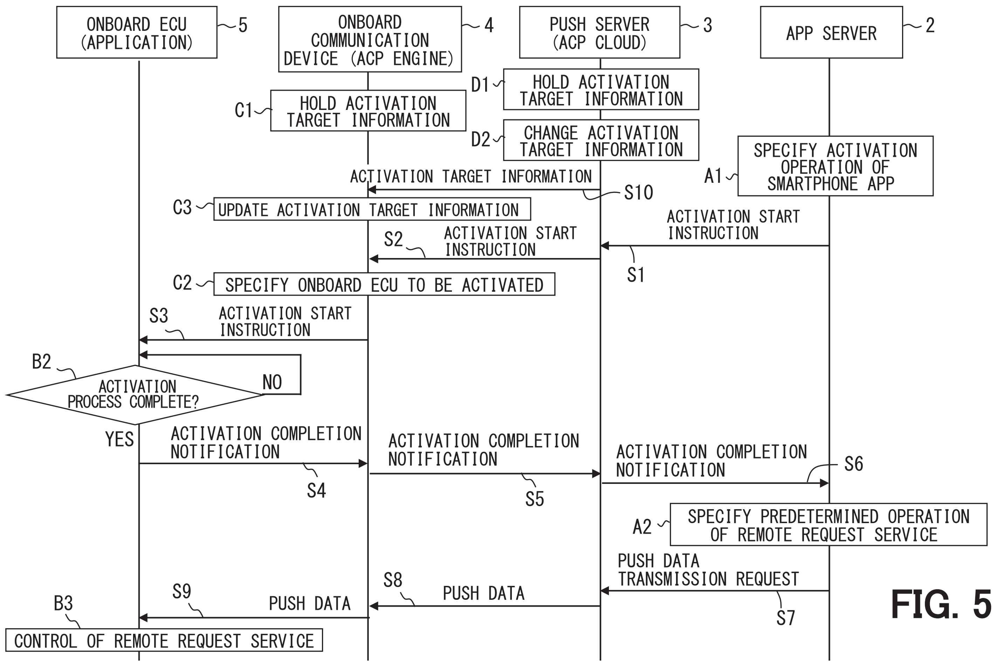

The third embodiment will be described with reference to FIG. 5. In the onboard communication device 4, the activation control unit 4a synchronizes the activation target information with the push server 3. The operation of the above-described configuration will be explained with reference to FIG. 5.

The push server 3 holds the activation target information (D1), and when the activation target information is updated (D2), the push server 3 transmits the activation target information to the onboard communication device 4 (S10). When the onboard communication device 4 receives the activation target information transmitted from the push server 3, it updates the activation target information it holds (C3), thereby synchronizing the activation target information with the push server 3. Thereafter, the same processing as in the second embodiment is performed.

As described above, according to the third embodiment, the activation target information is synchronized between the onboard communication device 4 and the push server 3. This allows the trade-off relationship between improving serviceability and marketability and reducing vehicle power consumption to be flexibly changed according to the needs of the vehicle or user, thereby enhancing convenience.

For example, in a case where a vehicle that does not have a high need to suppress vehicle power consumption during normal use is traveling a long distance, a need to suppress vehicle power consumption arises in order to secure cruising range. By updating the activation target information held in the push server 3 and synchronizing the activation target information between the onboard communication device 4 and the push server 3, it is possible to flexibly respond to changes in the usage environment.

### (Fourth Embodiment)

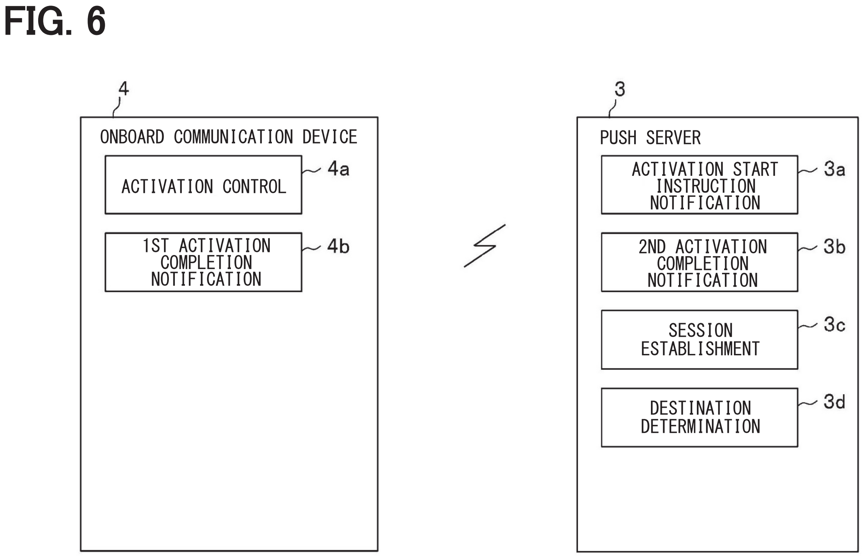

The fourth embodiment will be described with reference to FIG. 6 to FIG. 8. The push server 3 is provided with, in addition to the activation start instruction notification unit 3a and the second activation completion notification unit 3b, a session establishment unit 3c and a destination determination unit 3d.

The session establishment unit 3c, upon receiving an activation completion notification from the onboard communication device 4, establishes a session with the application 6. The destination determination unit 3d determines the transmission destination of the push data.

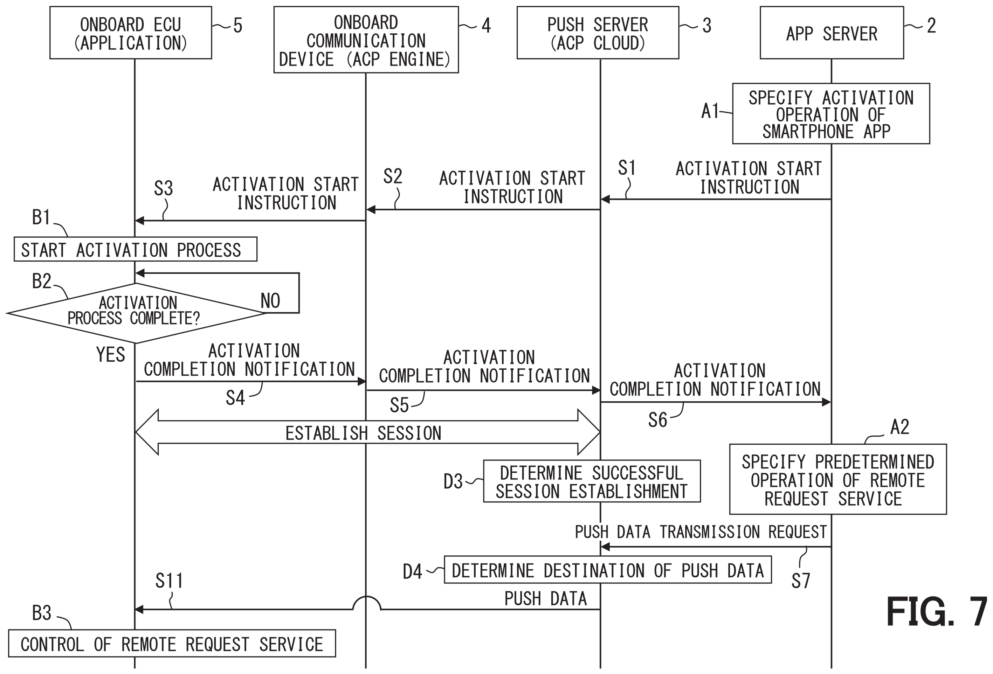

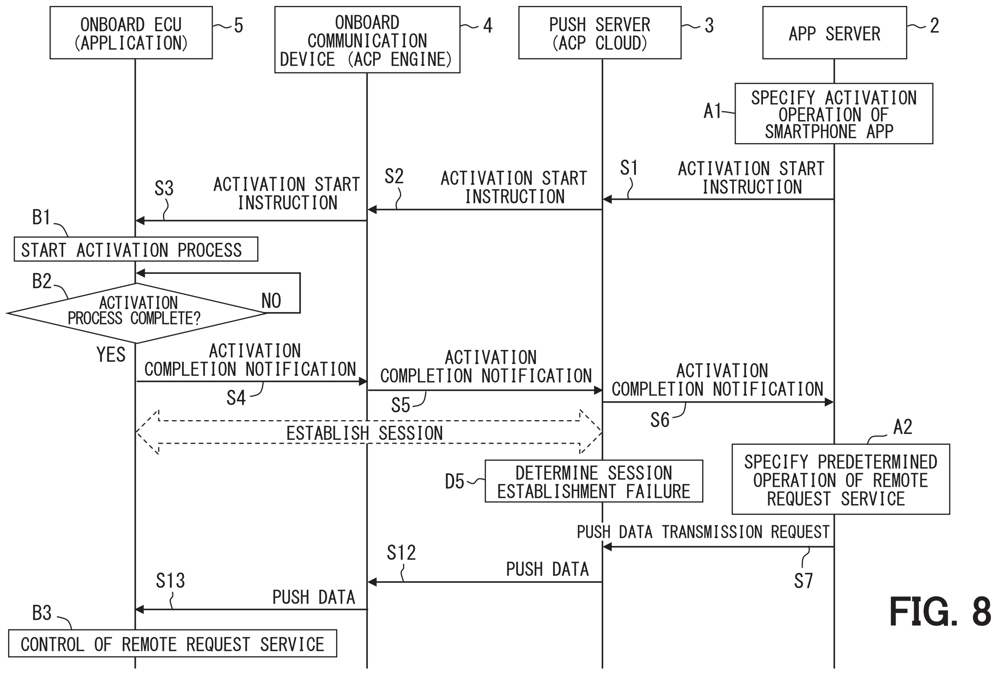

The operation of the above-described configuration will be explained with reference to FIG. 7 and FIG. 8. When the push server 3 receives an activation completion notification from the onboard communication device 4, it establishes a session with the application 6. The push server 3 manages the establishment of the session with the application 6 and determines the success or failure of the session establishment. As shown in FIG. 7, when the push server 3 determines that the session establishment with the application 6 has succeeded (D3), and receives a transmission request for push data from the application server 2, it determines the transmission destination of the push data (D4) and directly transmits the push data to the application 6 for which the session establishment has succeeded (S11).

On the other hand, as shown in FIG. 8, when the push server 3 determines that the session establishment with the application 6 has failed (D5), and receives a transmission request for push data from the application server 2, it transmits the push data to the onboard communication device 4 (S12). When the onboard communication device 4 receives the push data transmitted from the push server 3, it transmits the push data to the onboard ECU 5 (S13). When the onboard ECU 5 receives the push data transmitted from the onboard communication device 4, it delivers the push data to the application 6 corresponding to the push data, activates the application 6, and controls the remote request service corresponding to the push data (B3).

As described above, according to the fourth embodiment, a session is established between the application, which is the transmission destination of the push data, and the push server 3. By directly transmitting the push data from the push server 3 to the onboard ECU 5 and omitting the processing by the onboard communication device 4, it is possible to shorten the transmission time required for transmitting the push data from the push server 3 to the onboard ECU 5 and to enhance immediacy.

### (Other Embodiments)

The present disclosure has been described in accordance with the embodiments, but it is understood that it is not limited to these embodiments or structures. The present disclosure also encompasses various modifications and equivalents within the scope of the invention. In addition, various combinations and forms, as well as other combinations and forms including only one element, more than one, or less than one, are also within the scope and spirit of the present disclosure.

In the embodiments, each function provided by the push server 3 and the onboard communication device 4 can be implemented by software and hardware that executes the software, by software alone, by hardware alone, or by a composite combination thereof. Furthermore, when such functions are provided by electronic circuits as hardware, each function can be provided by digital circuits including a large number of logic circuits, or by analog circuits.

The processor 10 of the push server 3 and the processor 13 of the onboard communication device 4 each include at least one arithmetic core such as a CPU (Central Processing Unit). The processing circuits including each processor 10, 13 may be mainly composed of an FPGA (Field-Programmable Gate Array) or an ASIC (Application-Specific Integrated Circuit).

The storage medium 12 of the push server 3 and the storage medium 15 of the onboard communication device 4 each include a non-volatile storage medium. The forms of the storage media 12, 15 may be changed as appropriate. For example, each storage medium 12, 15 is not limited to a configuration provided on a circuit board, and may be provided in the form of a memory card or the like, and may be electrically connected to the processing circuit of the push server 3 or the onboard communication device 4 by being inserted into a slot. Furthermore, each storage medium 12, 15 may be an optical disk or hard disk drive or the like that serves as a copy source for the program.

The control unit and its methods described in the present disclosure may be implemented by a dedicated computer comprising a processor and memory programmed to execute one or more functions embodied by a computer program. Alternatively, the control unit and its methods described in the present disclosure may be implemented by a dedicated computer provided by configuring the processor with one or more dedicated hardware logic circuits. Alternatively, the control unit and its methods described in the present disclosure may be implemented by one or more dedicated computers configured by a combination of a processor and memory programmed to execute one or more functions and a processor configured with one or more hardware logic circuits. Further, the computer program may be stored as instructions to be executed by a computer on a computer-readable, non-transitory, tangible recording medium.

The present disclosure, in addition to the matters described in the claims, includes the following disclosures.
(1) An onboard communication device (4) is configured to transmit received push data to an onboard electronic control unit, upon receiving the push data from a push server in response to the push server receiving a transmission request of the push data from an application server. The onboard communication device includes: an activation control unit (4a) configured to cause the onboard electronic control unit, which is a transmission destination of the push data, to start an activation process when an activation start instruction is notified from the push server in response to an activation start instruction being notified from the application server to the push server immediately after startup of an application on a cloud side.
(2) In the onboard communication device according to (1), the activation control unit causes the onboard electronic control unit that is a transmission destination of the push data to start the activation process, and does not cause an onboard electronic control unit that is not the transmission destination of the push data to start the activation process.
(3) In the onboard communication device according to (1) or (2), the activation control unit specifies the onboard electronic control unit to be activated by the activation process based on activation target information.
(4) in the onboard communication device according to (3), the activation control unit synchronizes the activation target information with the push server.
(5) in the onboard communication device according to any one of (1) to (4), the activation control unit causes the onboard electronic control unit that is the transmission destination of the push data to start the activation process in a low power consumption state.
(6) The onboard communication device according to any one of (1) to (5) further includes a first activation completion notification unit (4b) configured to notify the push server, when the onboard electronic control unit completes the activation process, of an activation completion notification indicating that the onboard electronic control unit has completed the activation process.
(7) A push server (3) is configured to transmit a push data to an onboard communication device upon receiving a transmission request for the push data from an application server. The push server includes: an activation start instruction notification unit (3a) configured to, when an activation start instruction is notified from the application server immediately after startup of an application on a cloud side, notify the activation start instruction to the onboard communication device that is a transmission destination of the push data.
(8) In the push server according to (7), the onboard communication device is configured to notify the push server of an activation completion notification indicating that the onboard electronic control unit has completed the activation process when the onboard electronic control unit completes the activation process, and the push server further comprises a second activation completion notification unit (3b) configured to, upon receiving the activation completion notification from the onboard communication device, notify the activation completion notification to the application server.
(9) The push server according to (7) or (8) further includes a session establishment unit (3c) configured to establish a session with the application when an activation completion notification is notified from the onboard communication device.
(10) In the push server according to any one of (7) to (9), when the session is successfully established by the session establishment unit, the push data is directly transmitted to the application with which the session has been successfully established.
(11) The push server according to (10) further includes a destination determination unit (3d) configured to determine the transmission destination of the push data.
(12) In the push server according to (9) or (10), when the session establishment by the session establishment unit fails, the push data is transmitted to the onboard communication device.

## Claims

1. An onboard communication device (4) configured to transmit received push data to an onboard electronic control unit, upon receiving the push data from a push server in response to the push server receiving a transmission request of the push data from an application server, the onboard communication device comprising:
an activation control unit (4a) configured to cause the onboard electronic control unit, which is a transmission destination of the push data, to start an activation process when an activation start instruction is notified from the push server in response to an activation start instruction being notified from the application server to the push server immediately after startup of an application on a cloud side.

2. The onboard communication device according to claim 1, wherein
the activation control unit causes the onboard electronic control unit that is a transmission destination of the push data to start the activation process, and does not cause an onboard electronic control unit that is not the transmission destination of the push data to start the activation process.

3. The onboard communication device according to claim 1, wherein
the activation control unit specifies the onboard electronic control unit to be activated by the activation process based on activation target information.

4. The onboard communication device according to claim 3, wherein
the activation control unit synchronizes the activation target information with the push server.

5. The onboard communication device according to claim 1, wherein
the activation control unit causes the onboard electronic control unit that is the transmission destination of the push data to start the activation process in a low power consumption state.

6. The onboard communication device according to any one of claims 1 to 5, further comprising a first activation completion notification unit (4b) configured to notify the push server, when the onboard electronic control unit completes the activation process, of an activation completion notification indicating that the onboard electronic control unit has completed the activation process.

7. A push server (3) configured to transmit a push data to an onboard communication device upon receiving a transmission request for the push data from an application server, the push server comprising:
an activation start instruction notification unit (3a) configured to, when an activation start instruction is notified from the application server immediately after startup of an application on a cloud side, notify the activation start instruction to the onboard communication device that is a transmission destination of the push data.

8. The push server according to claim 7, wherein
the onboard communication device is configured to notify the push server of an activation completion notification indicating that the onboard electronic control unit has completed an activation process when the onboard electronic control unit completes the activation process, and
the push server further comprises a second activation completion notification unit (3b) configured to, upon receiving the activation completion notification from the onboard communication device, notify the activation completion notification to the application server.

9. The push server according to claim 8, further comprising
a session establishment unit (3c) configured to establish a session with the application when an activation completion notification is notified from the onboard communication device.

10. The push server according to claim 9, wherein
when the session is successfully established by the session establishment unit, the push data is directly transmitted to the application with which the session has been successfully established.

11. The push server according to claim 10, further comprising
a destination determination unit (3d) configured to determine the transmission destination of the push data.

12. The push server according to claim 9 or 10, wherein
when a session establishment by the session establishment unit fails, the push data is transmitted to the onboard communication device.
